Europäisches Patentamt

European Patent Office

Office européen des brevets

(11) Publication number: **0 493 910 A2**

# EUROPEAN PATENT APPLICATION

(21) Application number: 91311546.5

(51) Int. Cl.5: **B60K 28/16**

(22) Date of filing: **11.12.91**

(30) Priority: **04.01.91 GB 9100168**

(43) Date of publication of application:
**08.07.92 Bulletin 92/28**

(84) Designated Contracting States:
**DE ES FR GB IT SE**

(71) Applicant: **LUCAS INDUSTRIES PUBLIC
LIMITED COMPANY**
**Brueton House, New Road**
**Solihull, West Midlands B91 3TX(GB)**

(72) Inventor: **Howes, Michael John**
**3, Redhouse Close, Bentley Heath**
**Solihull, West Midlands, B93 8AR(GB)**

Inventor: **Glover, Douglas William**
**69, Foxcote Close, Winyates East**
**Redditch, Worcs. B98 0PS(GB)**
Inventor: **Bridgens, Barry John**
**13, Winding Mill South**
**Ouarry Bank, West Midlands, DY5 2LW(GB)**
Inventor: **Stevens, Simon David**
**1, West-of-St. Laurence, Old Warwick Road**
**Rowington, Warwickshire, CV35 7AB(US)**

(74) Representative: **Robinson, John Stuart et al**
**Marks & Clerk Alpha Tower Suffolk Street**
**Oueensway**
**Birmingham, B1 1TT(GB)**

(54) **Method of and apparatus for detecting wheel spin.**

(57) In a vehicle having driven and undriven wheels
(3, 4), the wheel speeds are measured (5, 10) and
the lowest undriven wheel speed determined (7, 11-
13). The driven wheel speeds are compared (7, 14-
16) with the lowest undriven wheel speed to detect
wheel spin. When wheel spin exceeds a threshold,
drive to the driven wheels is reduced.

FIG 1

The present invention relates to a method of and an apparatus for detecting wheel spin.

Wheeled vehicles depend upon the maintenance of an adequate frictional contact between the driven wheels of the vehicle and the ground. When the driving force at the driven wheels exceeds a value which is related to the weight acting on the driven wheels and the co-efficient of friction of the ground surface, the driven wheels slip with respect to the ground, thus exhibiting the phenomenon known as wheel spin. During normal operation of a vehicle on surfaces of relatively high co-efficient of friction, such as dry tarmac, wheel spin is not a problem. However, on surfaces of relatively poor co-efficient of friction, such as water logged tarmac, ice, and muddy surfaces, poor driving techniques can give rise to wheel spin.

When a wheel spins excessively, the loss of proper frictional contact with the ground allows the wheel to slip sideways and, in extreme circumstances, can result in spinning or excessive yawing of the vehicle i.e. lateral instability. Small amounts of wheel spin do not result in substantial lateral instability and may even be beneficial for maximising acceleration of the vehicle or preventing damage to the vehicle transmission caused by careless or over-enthusiastic driving techniques. However, excessive amounts of wheel spin should be avoided and, for this purpose, so-called "traction control" systems have been developed.

Known traction control systems measure the amount of wheel spin and, when this exceeds a fixed threshold, reduce the engine power demand so as to reduce wheel spin below a threshold value. Wheel spin is detected by measuring the speeds of the driven and undriven wheels and comparing the speeds of the driven wheels with the speed of the fastest undriven wheel or with the average speed of the undriven wheels. However, this can have disadvantages for vehicle operation.

According to a first aspect of the invention, there is provided an apparatus for detecting wheel spin in a vehicle having at least one driven wheel and a plurality of undriven wheels, comprising means for measuring the speeds of the wheels, means for determining the lowest one of the speeds of the undriven wheels, and means for comparing the speed of the at least one driven wheel with the lowest undriven wheel speed to detect wheel spin.

Preferably the comparing means is arranged to form the difference between the speed of the at least one driven wheel and the lowest undriven wheel speed and to compare the difference with a threshold.

For a vehicle having a plurality of driven wheels, the comparing means is preferably arranged to determine the differences between the speeds of the driven wheels and the lowest undriven wheel speed, to add the differences to form a sum, and to compare the sum with a threshold.

According to a second aspect of the invention, there is provided a method of detecting wheel spin in a vehicle having at least one driven wheel and a plurality of undriven wheels, comprising measuring the speeds of the wheels, determining the lowest one of the speeds of the undriven wheels, and comparing the speed of the at least one driven wheel with the lowest undriven wheel speed to detect wheel spin.

According to a third aspect of the invention, there is provided a traction control system comprising an apparatus according to the first aspect of the invention and means for reducing drive to the at least one driven wheel when wheel spin is detected.

According to a fourth aspect of the invention, there is provided a method of controlling traction, comprising detecting wheel spin by a method according to the second aspect of the invention and reducing drive to the at least one driven wheel when wheel spin is detected.

It is thus possible to provide an arrangement which gives improved driving characteristics compared to known arrangements. For instance, when the vehicle is travelling on an uneven or bumpy surface, early detection of wheel spin has the effect of reducing vehicle speed. Further, when cornering, traction control can be applied to reduce power to a greater extent so as to improve stability.

The invention will be further described, by way of example, with reference to the accompanying drawings, in which:

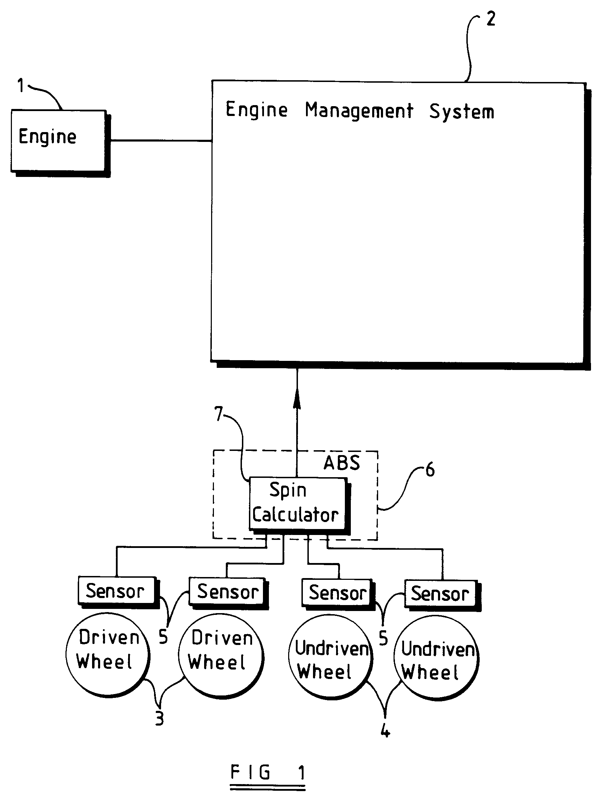

Figure 1 is a block schematic diagram of a wheel spin detector constituting an embodiment of the invention; and

Figure 2 is a flow diagram illustrating part of the operation of the detector of Figure 1.

A vehicle is driven by an internal combustion engine 1 whose operation is controlled by an engine management system 2. The vehicle has a pair of driven wheels 3 connected by a transmission (not shown) to the engine 1. The vehicle also has a pair of undriven wheels 4. The wheels 3 and 4 are provided with respective sensors 5, such as variable reluctance transducers co-operating with toothed wheels, which provide signals representing the speeds of the wheels. The wheel speed signals are supplied to an anti-lock brake system 6 which includes a spin calculator 7 for providing an output signal representing the amount of wheel spin detected. Alternatively, in the case of a vehicle which does not have an anti-lock brake system, the spin calculator and the sensors 5 may be provided in order to permit traction control.

The engine management system 2 controls operation of the engine, for instance by controlling the quantity of mixture supplied to the engine and the ignition timing in accordance with a demand signal from an accelerator pedal and various operational parameters of the engine such as engine speed. The engine management system 2 receives from the spin calculator 7 a signal representing the amount of wheel spin and, in accordance with a predetermined strategy, reduces the power demand so as to reduce or eliminate excessive wheel spin.

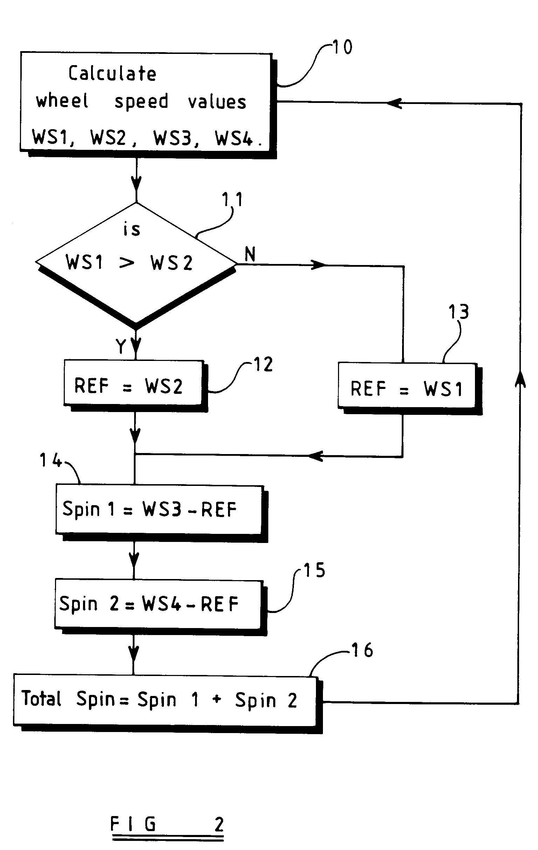

The flow chart shown in Figure 2 illustrates operation of the spin calculator 7. At 10, the wheel speed values WS1 and WS2 of the undriven wheels 4 and the wheel speed values WS3 and WS4 of the driven wheels 3 are calculated from the signals supplied by the sensors 5. At 11, the speed values of the undriven wheels 4 are compared with each other. If the wheel speed value WS1 is greater than the value WS2, a reference value REF is set equal to the value WS2 at 12. Otherwise, the value REF is set equal to the value WS1 at 13. Thus, the steps 11, 12, and 13 set the value REF to the lower of the undriven wheel speed values WS1 and WS2.

At 14, a first spin value is calculated as the difference between the driven wheel speed value WS3 and the reference value REF. At 15, a second wheel spin value is set equal to the difference between the driven wheel speed value WS4 and reference value REF. At 16, the total spin is determined as the sum of the first and second spin values, and the total spin is supplied to the engine management system 2. Control then returns to the step 11 for the next cycle of operation.

In order to detect excessive wheel spin, the engine management system 2 may be arranged to compare the total spin determined by the spin calculator 7 with a fixed threshold value such that, when the total spin exceeds this threshold value, the output demand of the engine 1 is reduced. However, any suitable strategy for performing traction control may be used. For instance, the technique disclosed in published European Patent Specification No.0 444 803 may be used.

This technique for detecting wheel spin provides advantages in vehicle operation compared with the known arrangement in which the highest or average undriven wheel speed is used as the reference value. In particular, improved driving characteristics are obtained over bumpy road surfaces since this technique has the desirable effect of reducing vehicle speed as compared with the known arrangement. Further, during cornering, traction control is applied to reduce power to a greater extent than with the known arrangement, so that vehicle stability is improved.

**Claims**

1. An apparatus for detecting wheel spin in a vehicle having at least one driven wheel (3) and a plurality of undriven wheels (4), comprising means (5, 10) for measuring the speeds of the wheels (3, 4), characterised by means (6, 11-13) for determining the lowest one of the speeds of the undriven wheels (4) and means (7, 14, 15) for comparing the speed of the at least one driven wheel (3) with the lowest undriven wheel speed to detect wheel spin.

2. An apparatus as claimed in Claim 1, characterised in that the comparing means (7, 14, 15) is arranged to form the difference between the speed of the at least one driven wheel (3) and the lowest undriven wheel speed and to compare the difference with a threshold.

3. An apparatus as claimed in Claim 1 for a vehicle having a plurality of driven wheels (3), characterised in that the comparing means (7, 14-16) is arranged to determine the differences between the speeds of the driven wheels (3) and the lowest undriven wheel speed, to add the differences to form a sum, and to compare the sum with a threshold.

4. A traction control system characterised by an apparatus as claimed in any one of the preceding claims and means (2) for reducing drive to the at least one driven wheel (3) when wheel spin is detected.

5. A method of detecting wheel spin in a vehicle having at least one driven wheel and a plurality of undriven wheels, comprising measuring the speeds of the wheels, determining the lowest one of the speeds of the undriven wheels, and comparing the speed of the at least one driven wheel with the lowest undriven wheel speed to detect wheel spin.

6. A method as claimed in Claim 5, further comprising forming the difference between the speed of the at least one driven wheel and the lowest undriven wheel speed and comparing the difference with a threshold.

7. A method as claimed in Claim 5 for a vehicle having a plurality of driven wheels, further comprising determining the differences between the speeds of the driven wheels and the lowest undriven wheel speed, adding the differences to form a sum, and comparing the sum with a threshold.

8. A method of controlling traction comprising detecting wheel spin by a method as claimed in any one of Claims 5 to 7 and reducing drive to the at least one driven wheel when wheel spin is detected.

FIG 1

Calculate wheel speed values WS1, WS2, WS3, WS4. — 10

is WS1 > WS2 — 11

N → REF = WS1 — 13

Y → REF = WS2 — 12

Spin 1 = WS3 - REF — 14

Spin 2 = WS4 - REF — 15

Total Spin = Spin 1 + Spin 2 — 16

F I G     2